# EUROPEAN PATENT SPECIFICATION

(11) **EP 4 026 755 B1**
(45) Date of publication and mention of the grant of the patent: **28.10.2026**
(21) Application number: 21218368.5
(22) Date of filing: 30.12.2021
(51) Int. Cl.: B62D 5/04, B62D 15/02, A01B 69/04

(54) **STEERING CONTROL METHOD AND STEERING WHEEL STEERING DEVICE FOR AUTOMATIC DRIVING**
LENKUNGSSTEUERUNGSVERFAHREN UND VORRICHTUNG ZUR LENKUNG DES LENKRADS FÜR AUTOMATISCHES FAHREN
PROCÉDÉ DE COMMANDE DE DIRECTION ET DISPOSITIF DE DIRECTION DE VOLANT POUR CONDUITE AUTOMATIQUE

(30) Priority: 06.01.2021 CN 202110013797
(43) Date of publication of application: 13.07.2022
(73) Proprietor: FJ Dynamics Co., Ltd., Shenzhen, Guangdong 518000 (CN)
(72) Inventor: ZHOU, Qi, Shenzhen, 518000 (CN); Wu, Di, Nanjing, 210001 (CN)
(74) Representative: Zaboliene, Reda

(56) References cited:
- EP-A1- 3 725 644
- WO-A1-2019/192117
- CN-A- 109 466 620
- DE-A1- 102017 220 158
- US-A1- 2006 015 251
- US-A1- 2014 025 260
- US-A1- 2020 064 144

## Description

### TECHNICAL FIELD

The present disclosure relates to automatic driving, and particularly to a steering control method, a steering wheel steering device for automatic driving.

### BACKGROUND

The servo motor rotation system (including a servo motor and a drive) in vehicles has many redundant designs, high purchase cost, and low torque and work efficiency. For example, the servo motor rotation system may include a steering column, a torque sensor, a servo motor, a control module, and other components, and after the vehicle is started, the servo motor rotation system starts to work. When a vehicle speed is less than a certain speed, the control module transmits a control instruction to the servo motor based on data such as a steering torque, a rotation direction, and the vehicle speed etc., to enable the servo motor to output the torque having corresponding magnitude and direction, so as to generate auxiliary power.

However, in a current field of autonomous vehicles, such as agricultural machinery, an automatic steering system itself only has a single steering function. If rotation angle information is required to be fed back, the automatic steering system requires an additional external angle sensor, at an increased cost of the entire steering system. In autonomous vehicles, the cost of sensors is relatively important. The control system of the autonomous vehicles requires to acquire various parameters with the help of various types of sensors, and make decisions based on those parameters, so as to automatically control the vehicle, and realize automatic driving. EP3725644A1 discloses a method for controlling steering of a vehicle with which it is possible to suppress a sense of discomfort imparted to a driver even when frequent fine adjustments are made to a turning angle while turning is carried out in response to a target turning angle command, a steering/turning controller (4): inputs a target turning angle command created based on travel environment information (step S1); determines whether the target turning angle command is a corrective turning region, in which an angle is equal to or less than an angle threshold value (θlim) and an angular velocity is equal to or greater than an angular velocity threshold value (ωlim), or a non-corrective turning region other than the corrective turning region (step S2); when generating a steering command angle and a turning command angle based on the target turning angle command, sets a distribution of the steering command angle to "zero" and generates only the turning command angle in the case of the corrective turning region (S3); and generates the steering command angle and the turning command angle in the case of the non-corrective turning region (S3, S5, S8). CN109466620A discloses a harvester steering control system and a harvester, the harvester steering control system comprises a row sensing device with movable blades, wherein the row sensing device generates a sensor signal representative of the blades position parameters; an inertia measuring unit for measuring the yaw rate of the harvester, wherein the inertial measuring unit generates a signal representing the yaw rate of the harvester; a calculating unit connected with the row sensing device and the inertial measuring unit, wherein the calculating unit calculates the course deviation, the transverse deviation and the steering wheel angle according to the yaw rate signal and the sensor signal; a steering control unit connected with the calculating unit, wherein the steering control unit calculates the rotation angle of the steering wheel according to the course deviation, the transverse deviation and the steering wheel angle. WO2019/192117A1 discloses an electric steering wheel based control method for automatic driving of agricultural machinery, comprising the following steps: step (1): outputting a steering angle instruction by a navigation controller; step (2): a first steering controller performing PD control by steering angle feedback of a front wheel, and outputting a control instruction to a second steering controller; and step (3): the second steering controller performing PD control by rotational speed feedback of a steering wheel, and outputting a control instruction to the electric steering wheel. The inner ring of the present invention uses PD control based on steering wheel rotational speed feedback, the outer ring uses PD control based on vehicle wheel rotational angle feedback, and while improving the response speed of the steering control system, also has relatively high precision and robustness. US2014/025260A1 discloses a guidance and vehicle control system for automatically steering a vehicle, such as an agricultural vehicle or a tractor, through a field. The system includes a GNSS receiver and antenna for determining the vehicle's instantaneous position, a guidance CPU, and an automatic steering subsystem integrated with the vehicle's electrical power system. The automatic steering subsystem can be interfaced with the steering column of the vehicle, and mechanically activates the steering column, thereby steering the vehicle according to instructions received from the CPU based upon the vehicle's position and a predetermined path. An interrupt element, such as a wheel movement sensor or a slip gear, may be interfaced with the automatic steering subsystem to allow for manual steering override of the automatic steering control. US2006/015251A1 discloses a system for controlling a mobile machine. In one embodiment the system comprises a position determining component for determining the geographic position of the mobile machine. The system further comprises a steering component for controlling the steering mechanism of the mobile machine in response to a message. The system further comprises a control component coupled with the position determining component and with the steering component. The control component generates a message to the steering component in response to receiving position data from the position determining component.

### SUMMARY

The present disclosure provides a steering control method, a steering wheel steering device for automatic driving, the steering wheel motor rotation system can be controlled without any additional angle sensor, thereby saving installation costs and maintenance costs. The scope of the present disclosure is defined by the independent claims 1 and 6.

The present disclosure provides a steering control method, a steering wheel steering device for automatic driving, the steering wheel motor rotation system can adjust a direction based on instructions of a vehicle control system, so that the vehicle travels based on an expected planned path.

The present disclosure provides a steering control method, a steering wheel steering device for automatic driving, the steering wheel motor steering system can automatically determine whether steering is being done by a human driver, and control the vehicle to return to a traditional driving mode.

The present disclosure provides a steering control method, a steering wheel steering device for automatic driving, the steering wheel motor steering system drives a steering wheel by a motor, and determines a rotation angle of the steering wheel by acquiring a rotation angle of the motor, thereby no external angle sensor is required to detect the rotation angle of the steering wheel.

According to one aspect of the present disclosure, a steering control method for automatic driving is provided, the steering control method includes:
in response to a steering instruction, driving a steering wheel to rotate a preset angle by using a steering wheel motor, a rotation angle of the steering wheel being controlled by rotation of the steering wheel motor.

According to one embodiment of the present disclosure, the steering control method further includes:
when the vehicle travels automatically along a planned path, and a deviation between an actual track of the vehicle and the planned path is greater than a preset value, transmitting the steering instruction to a steering wheel steering device, which comprises the steering wheel motor and the steering wheel.

According to one embodiment of the present disclosure, the steering control method further includes:
when the actual track is corrected until the deviation between the actual track and the planned path is less than the preset value, controlling the steering wheel to remain in a current position by controlling the steering wheel motor to stop rotating.

According to one embodiment of the present disclosure, the steering control method further includes:
when the vehicle is required to turn around, transmitting the steering instruction to a vehicle control device, and a steering wheel steering device being controlled by the vehicle control device.

According to one embodiment of the present disclosure, the steering control method further includes:
transmitting, by the vehicle control device, an instruction to the steering wheel steering device, to activate a steering wheel motor of the steering wheel steering device into a working mode;
acquiring state parameters of the steering wheel motor and determining whether the steering wheel steering device is in an idle state; and
when the steering wheel steering device is in the idle state, controlling the steering wheel steering device to rotate based on the steering instruction from the vehicle control device.

According to one embodiment of the present disclosure, the steering control method further includes:
acquiring a rotation speed of the steering wheel motor;
comparing the rotation speed of the steering wheel motor with a preset rotation speed in the steering instruction; and
when the rotation speed of the steering wheel motor is less than the preset rotation speed, controlling the steering wheel motor to increase the rotation speed.

According to one embodiment of the present disclosure, the steering control method further includes:
adjusting a heading angle of the vehicle to the preset angle; and
controlling, by the vehicle control device, the steering wheel motor to stop rotating, so as to stop rotating the steering wheel.

According to one embodiment of the present disclosure, the steering control method further includes:
when the steering wheel is taken over manually by a human driver, controlling the steering wheel motor to stop working, to control the vehicle to enter a manual steering control state.

According to another aspect of the present disclosure, a steering wheel steering device applied in driving a vehicle to steer is provided, the steering wheel steering device includes:
a steering wheel; and
a steering wheel motor, wherein:
the steering wheel is connected with the steering wheel motor and is driven by the steering wheel motor,
the steering wheel motor is controllably connected with a vehicle control device of the vehicle,
the vehicle control device transmits a steering instruction to the steering wheel motor based on an automatic driving instruction, to control the steering wheel motor to rotate the steering wheel to a preset angle, and
a rotation angle of the steering wheel is controlled by rotation of the steering wheel motor.

According to one embodiment of the present disclosure, the steering wheel steering device further includes:
a steering wheel motor detector acquiring rotation parameters of the steering wheel motor and communicating with the vehicle control device, the steering instruction transmitted by the vehicle control device comprises a rotation parameter setting value of the steering wheel motor.

### BRIEF DESCRIPTION OF THE DRAWINGS

FIG. 1A is a schematic view of one embodiment of a vehicle with a steering wheel steering device according to the present disclosure.
FIG. 1B is a schematic view of one embodiment of the a steering wheel steering device according to the present disclosure.
FIG. 2 is a schematic view of an application environment of one embodiment of a steering control method according to the present disclosure.
FIG. 3 is a flowchart of one embodiment of a steering control method according to the present disclosure.

### DETAILED DESCRIPTION

One of ordinary skill in the art should understand that, according to the present disclosure, the orientation or position relationship indicated by the terms "longitudinal", "lateral", "upper", "lower", "front", "rear", "left", "right", "vertical", "horizontal", "top", "bottom", "inner", "outer", etc., is the orientation or positional relationship shown in the drawings, which is convenient for describing the present disclosure and simplifying the description. No indication or implication is to be taken that the referred device or component must have a specific orientation, or be constructed and operated in a specific orientation, the above terms should not be understood as limiting the present disclosure.

It can be understood that, the term "a" should be understood as "at least one" or "one or more", that is, in one embodiment, the number of a component may be one, and in another embodiment, the number of the components may also be multiple, the term "one" cannot be understood as a restriction on the number.

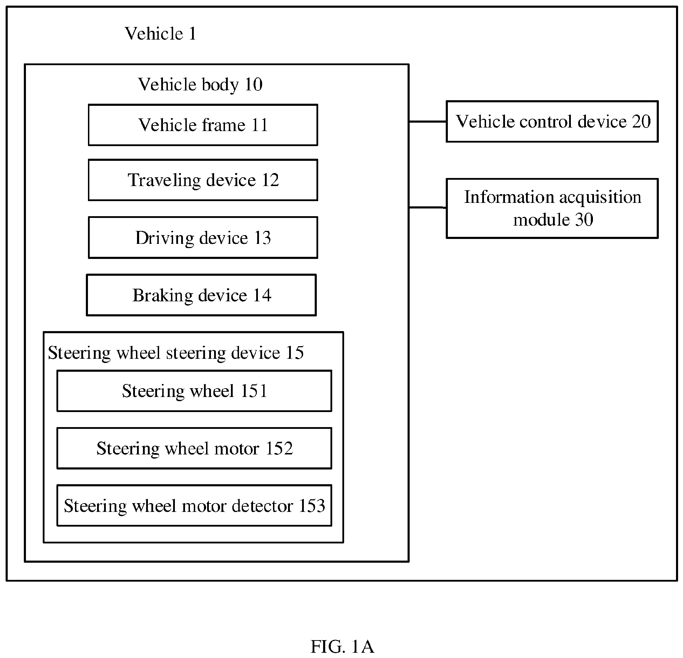

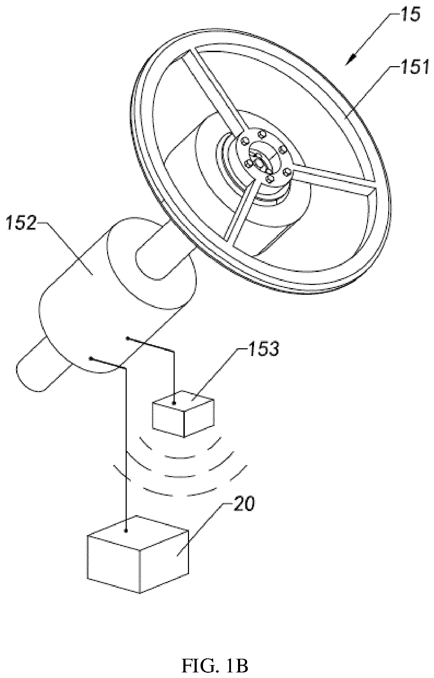

Referring to FIGS. 1A and 1B, a steering wheel steering device 15 and a vehicle 1 with a steering wheel 151 according to one embodiment of the present disclosure are illustrated respectively.

The vehicle 1 can be driven automatically or manually, a type of the vehicle 1 can be, but is not limited to, a car, a passenger car, a truck, an agricultural machine, or a motorized trolley in a factory. It is understandable that, the steering wheel steering device 15 can be used not only in the vehicle 1 of the above example, but also in a movable system with a steering wheel, which can realize steering by manipulating the steering wheel. It is understandable that the vehicle 1 may be an internal combustion engine vehicle, an electric vehicle, or a vehicle using other energy source.

The vehicle 1 includes a vehicle body 10 and a vehicle control device 20, the vehicle body 10 is controllably connected with the vehicle control device 20. The vehicle body 10 can include a vehicle frame 11, a traveling device 12, a driving device 13, a braking device 14, and the steering wheel steering device 15. The traveling device 12, the driving device 13, the braking device 14, and the steering wheel steering device 15 are respectively arranged on the vehicle frame 11. The traveling device 12 is connected with the vehicle control device 20 and can be driven by the vehicle control device 20, and when the traveling device 12 is in motion, the braking device 14 can reduce and stop the motion. The steering wheel steering device 15 controls steering of the traveling device 12, that is, controls manner and process of steering of the traveling device 12.

The traveling device 12, the driving device 13, the braking device 14, and the steering wheel steering device 15 are controllably connected with the vehicle control device 20, and the vehicle control device 20 controls the vehicle body 10 based on data acquired by various sensors, so that the vehicle body 10 can be controlled as desired.

The vehicle 1 further includes an information acquisition device 30, the information acquisition device 30 includes a number of sensors, such as a GPS, an infrared sensor, and an angle sensor, and acquires information about the vehicle body 10 itself or information outside the vehicle 1, such as environmental information or external instruction information. The vehicle control device 20 communicates with the information acquisition device 30 and processes the data acquired by the information acquisition device 30, and then transmits instructions to control the vehicle body 10 based on a processing result.

The steering wheel steering device 15 includes the steering wheel 151 and a steering wheel motor 152. The steering wheel 151 is connected with the steering wheel motor 152 and can be driven by the steering wheel motor 152, and an output shaft of the steering wheel motor 152 rotates to drive the rotation of the steering wheel 151.

It is worth noting that, the steering wheel steering device 15 does not require an additional angle sensor for detecting a rotation angle of the steering wheel 151. The rotation of the steering wheel 151 is realized by the rotation of the output shaft of the steering wheel motor 152, the rotation angle of the steering wheel 151 being determined by acquiring the rotation angle of the output shaft of the steering wheel motor 152. Further, the steering wheel steering device 15 includes a steering wheel motor detector 153. The steering wheel motor detector 153 is configured to detect a state of the steering wheel motor 152, such as a speed, a steering direction, or other parameters of the steering wheel motor 152. The steering wheel motor detector 153 communicates with the vehicle control device 20, so that the vehicle control device 20 can determine the state of the steering wheel motor 152 in real time, and transmit the instructions to the steering wheel motor 152 based on the state of the steering wheel motor 152. The steering wheel motor detector 153 can be a speed sensor or an acceleration sensor.

In one embodiment, the vehicle control device 20 can be one of the at least one processer 102. The vehicle control device 20 executes the instructions stored in the storage device 101, and the instructions can be used for implementing the steering control method provided in the embodiments of the present disclosure.

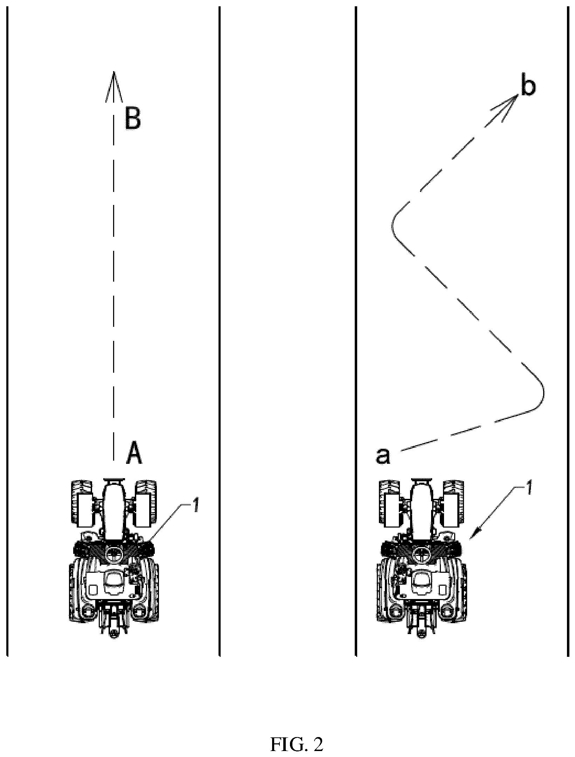

For example, referring to FIG. 2, an application mode of the steering wheel steering device 15 according to one embodiment in an automatic driving process of the vehicle 1 is illustrated.

The vehicle 1 travels automatically along a preset path from A to B. After the vehicle 1 has traveled for a period of time, based on the data acquired by the information acquisition device 30, the vehicle control device 20 determines that a certain deviation has occurred between a current track of the vehicle 1 and the preset path. If a deviation exceeds a preset range, based on such situation, the vehicle control device 20 transmits an instruction to the steering wheel steering device 15, to control the steering wheel motor 152 to rotate, so that the steering wheel 151 rotates, to change a traveling direction of the vehicle body 10.

In the above process, the information acquisition device 30 acquires position information of the vehicle body 10 in real time, for example, the position information of the vehicle body 10 is acquired through GPS, the vehicle control device 20 processes the data acquired by the information acquisition device 30. If the processing result determined by the vehicle control device 20 is that the current driving track of the vehicle body 10 coincides with the preset path, the vehicle control device 20 transmits the instruction to the steering wheel steering device 15, to cancel the rotation of the steering wheel motor 152 and the steering wheel 151 remains in such position as to continue along the preset path, the data related to the current rotation angle of the steering wheel motor 152 can be fed back to the vehicle control device 20 in real time through the information acquisition device 30.

Further, if the vehicle control device 20 determines that the vehicle body 10 deviates from the preset path again based on the data acquired by the information acquisition device 30, the above steps can be repeated, and the vehicle control device 20 continues to adjust the steering wheel 151 until the vehicle 1 completes the preset path automatically.

According to one aspect of the present disclosure, a steering control method for automatic driving is provided, the steering control method includes:

After the vehicle 1 starts to travel automatically, the vehicle 1 automatically travels along a preset direction, once the real-time track of the vehicle 1 deviates from the preset path and the deviation is greater than a preset value, the vehicle control device 20 transmits the instruction to the steering wheel motor 152, to control the steering wheel motor 152 to rotate the steering wheel 151 to adjust the traveling direction of the vehicle 1, until the deviation between the real-time track of the vehicle 1 and the preset path is within the preset range.

In detail, when the deviation is greater than the preset value, the rotation parameters of the steering wheel motor 152, such as a rotation speed and a rotation direction, are adjusted, and the rotation parameters are fed back to the vehicle control device 20 in real time. When the deviation of the vehicle 1 is adjusted to be within the preset range, for example, when the travel track of the vehicle 1 coincides with the preset path, the vehicle control device 20 controls the steering wheel motor 152 to stop rotating, to stop the adjustment of the steering wheel 151, so as to regain the traveling direction of the vehicle 1. In other words, at this time, the steering wheel 151 is kept in the adjusted direction. When the deviation is greater than the preset value again, the vehicle control device 20 retransmits the instruction to the steering wheel motor 152, to adjust the position of the steering wheel 151, until the deviation returns to within the preset range or no longer deviates.

For example, when the vehicle 1 is traveling along a straight line, after a period of time, it is determined that the vehicle 1 has deviated to the left, then the vehicle control device 20 controls the steering wheel motor 152 to rotate, to control the vehicle to travel to the right, so as to return to the expected straight line, and the steering wheel 151 is kept in the adjusted position. After the vehicle 1 returns to the expected straight track and after a period of time, the vehicle 1 again deviates, to the right, thus the vehicle control device 20 will control the steering wheel motor 152 to rotate in reverse, to rotate the steering wheel 151, so that the vehicle 1 is turned to the left. In this way, the position of the steering wheel 151 is continuously adjusted based on the traveling track of the vehicle 1.

It can be understood that, after the vehicle 1 returns to the expected straight line, the steering wheel motor 152 can also automatically return to center and restore to the state before adjustment, so that the steering wheel 151 is controlled to return to center, that is, restored to an initial state. In other words, when the adjustment is completed, the steering wheel 151 can be returned to center, or can be kept in the adjusted state.

Further, if a human driver suddenly needs to adjust the driving direction of the vehicle 1 based on requirement, the driver can intervene at any time and control the steering wheel 151. For example, if the vehicle 1 keeps traveling in the straight line, and the driver turns the steering wheel 151 to the right, so as to control the vehicle 1 to travel to the right, the steering wheel steering device 15 will not operate, that is, the steering wheel motor 152 does not rotate the steering wheel 151 against the human driver, but allows the steering wheel 151 to be rotated by the operation of the human driver.

The steering wheel steering device 15 can determine whether the human driver is involved in the operation by detecting force or contra force experienced by the steering wheel motor 152, although the steering wheel steering device 15 being forced or contra forced by the human driver is only one means of detecting the actions of the human driver.

Further, the vehicle 1 with the steering wheel steering device 15 can not only automatically correct the direction when there are deviations from the planned course, but can also perform automatic steering.

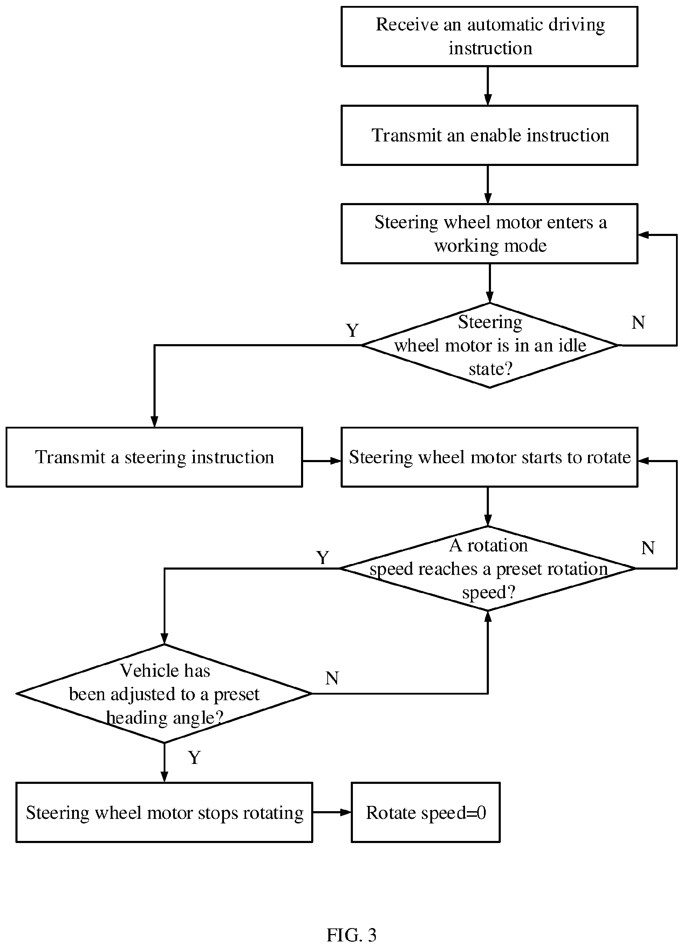

Referring to FIG. 3, the vehicle 1 can be automatically turned around at a position if required. In detail, the vehicle control device 20 of the vehicle 1 can receive external instructions, and transmit an instruction to the steering wheel steering device 15 based on the external instructions, to control the steering wheel steering device 15 to enter a working state. In addition, the vehicle control device 20 can acquire parameters from the steering wheel steering device 15, such as the current rotation angle of the steering wheel motor 152.

If the steering wheel motor 152 is currently in an idle state, the vehicle control device 20 generates a control instruction based on the parameters from the steering wheel steering device 15 and the external instructions, and controls the steering wheel motor 152 to rotate based on a certain rotation speed and a rotation direction, to rotate the steering wheel 151.

If the steering wheel 151 is currently in a working state, for example, and is then manipulated by the human driver, the vehicle control device 20 can issue prompts based on the parameters from the steering wheel steering device 15.

Further, the information acquisition device 30 acquires a position state of the vehicle 1 in real time, so that the vehicle control device 20 can determine whether the vehicle body 10 has completed a track or an operation, such as turning around. If the vehicle 1 has not completed the operation and a heading angle of the vehicle 1 has not been adjusted to an expected angle, the vehicle control device 20 continues to transmit the instruction to the steering wheel steering device 15, to control the steering wheel motor 152 to continue to rotate, so that the steering wheel 151 continues to be adjusted. If the vehicle control device 20 determines that the current heading angle of the vehicle 1 reaches the expected angle based on the information acquired by the information acquisition device 30, then the vehicle control device 20 transmits the instruction to the steering wheel steering device 15, to control the steering wheel motor 152 of the steering wheel steering device 15 to stop rotating the steering wheel 151.

The steering control method can include:
the vehicle control device 20 receives an automatic driving instruction, the automatic driving instruction may from an APP, for example, from a mobile electronic device, and a user can control the vehicle 1 through the mobile electronic device;
the vehicle control device 20 receives instructions and transmits an enable instruction to the steering wheel motor 152;
the steering wheel motor 152 enters a working mode based on the enable instruction from the vehicle control device 20;
acquire a state of the steering wheel steering device 15 and feed the acquired state back to the vehicle control device 20;
if the steering wheel steering device 15 is determined to be in an idle state based on the acquired state of the steering wheel steering device 15, the vehicle control device 20 transmits a steering instruction to the steering wheel motor 152, to adjust the position of the steering wheel 151;
the steering wheel motor 152 starts to rotate when receiving the steering instruction;
if a rotation speed of the steering wheel motor 152 reaches a preset rotation speed, the steering wheel motor 152 stops rotating, if the rotation speed of the steering wheel motor 152 does not reach the preset rotation speed, the steering wheel motor 152 continues to increase the rotation speed;
acquire a heading angle information of the vehicle 1.
if the vehicle 1 has been adjusted to a preset heading angle, the vehicle control device 20 transmits an instruction to the steering wheel steering device 15, to control the steering wheel motor 152 to stop working, until the rotation speed of the steering wheel motor 152 reduces to zero. If the vehicle 1 has not been adjusted to the preset heading angle, the vehicle control device 20 continues to transmit the instruction to the steering wheel steering device 15, to control the steering wheel steering device 15 to continue to maintain the adjustment.

Further, in other embodiments, the steering control method includes:
in response to a steering instruction, the steering wheel motor 152 drives the steering wheel 151 to rotate to a preset angle, the rotation angle of the steering wheel 151 is controlled by the rotation of the steering wheel motor 152;
if the vehicle 1 travels automatically along a planned path, and a deviation between the actual track of the vehicle 1 and the planned path is greater than a preset value, transmit the steering instruction to the steering wheel steering device 15; and
if the actual track of the vehicle 1 is corrected, and the deviation between the actual track of the vehicle 1 and the planned path becomes less than the preset value, retransmit the steering instruction to the steering wheel steering device 15, so that a deviation between the actual track and the planned path of vehicle 1 can be maintained as much as possible.

In detail, when the vehicle 1 travels along a straight line, and after a period of time, it is determined that the traveling track of the vehicle 1 is deviating to the right, transmit the steering instruction to control the vehicle 1 to turn to the left, until the deviation between the traveling track and the planned path is less than the preset value. After the deviation between the traveling track of the vehicle 1 and the planned path returns to less than the preset value, the vehicle control device 20 continues to transmit the steering instruction to the steering wheel steering device 15 of the vehicle 1, to control the steering wheel 151 to return to center for a certain angle, so as to reduce possibility of an increasing deviation between the actual track of the vehicle 1 and the planned path.

In this way, before the deviation between the actual track of the vehicle 1 and the planned path increases, the steering of the steering wheel 151 of the vehicle 1 can be corrected in advance. That is, the steering wheel 151 of the vehicle 1 can be corrected in advance.

In the steering process, whenever manual power takes over the steering wheel 151, the data of the steering wheel steering device 15 can be fed back to the vehicle control device 20, and the vehicle control device 20 can determine the priority of the manual intervention being higher than its own steering instruction.

Upon manual intervention on the steering wheel 151, the steering wheel motor 152 can stop working, so that the human user can fully control the steering wheel 151. It may also be that, the steering wheel motor 152 plays an auxiliary role. In detail, after manual intervention on the steering wheel 151, the vehicle control device 20 can determine the rotation direction of the steering wheel 151 based on the data acquired by the steering wheel motor detector 153 from the steering wheel motor 152. When the steering wheel 151 is rotated in a direction, the vehicle control device 20 transmits the instruction to the steering wheel motor 152 based on the data detected by the steering wheel motor detector 153, to control the steering wheel motor 152 to rotate the steering wheel 151 along the direction in which the steering wheel 151 is rotated. For the human user, it will be more convenient to manually operate the steering wheel 151, especially in the case of a large vehicle being operated.

Further, the steering wheel steering device 15 has an emergency mechanism. In detail, the information acquisition device 30 of the vehicle 1 continuously acquires the surrounding environment information of the vehicle 1 while automatic driving. After the human user intervenes on the steering wheel 151, the steering wheel 151 is controlled by the human user. If the vehicle control device 20 determines that an obstacle is in front based on the information acquired by the information acquisition device 30, but the human user does not perform safety action within a preset time, such as steering away or around, if the vehicle 1 continues to drive in the current direction, the vehicle 1 will hit the obstacle. In this case, the vehicle control device 20 can transmit an instruction to the steering wheel steering device 15, to control the steering wheel motor 152 to rotate the steering wheel 151. If the human user is steering the vehicle 1 during this process, but the steering direction is opposite to the steering direction in the instruction of the vehicle control device 20, the priority of the instruction transmitted by the vehicle control device 20 is then higher than the manual operation instruction, and the vehicle 1 turns to avoid the obstacle under control of the vehicle control device 20.

## Claims

1. A steering control method for automatic driving of a vehicle, comprising: in response to a steering instruction, driving a steering wheel (151) to rotate a preset angle by using a steering wheel motor (152) based on an automatic driving instruction, a rotation angle of the steering wheel (151) being controlled by rotation of the steering wheel motor (152), **characterized in that**, the steering control method further comprises:
in response that the vehicle (1) is required to turn around, transmitting the steering instruction to a vehicle control device (20), and a steering wheel steering device (15) being controlled by the vehicle control device (20);
transmitting, by the vehicle control device (20), an instruction to the steering wheel steering device (15), to activate the steering wheel motor (152) of the steering wheel steering device (15) into a working mode;
acquiring state parameters of the steering wheel motor (152) and determining whether the steering wheel steering device (15) is in an idle state, the idle state being a state that the steering wheel (151) is not manipulated by a driver and is in a working state;
in response that the steering wheel steering device (15) is in the idle state, controlling the steering wheel steering device (15) to rotate based on a control instruction from the vehicle control device (20);
acquiring a rotation speed of the steering wheel motor (152);
comparing the rotation speed of the steering wheel motor (152) with a preset rotation speed in the control instruction; and
in response that the rotation speed of the steering wheel motor (152) is less than the preset rotation speed, controlling the steering wheel motor (152) to increase the rotation speed.

2. The steering control method according to claim 1, further comprising:
in response that the vehicle (1) travels automatically along a planned path, and a deviation between an actual track of the vehicle (1) and the planned path is greater than a preset value, transmitting the steering instruction to the steering wheel steering device (15), which comprises the steering wheel motor (152) and the steering wheel (151).

3. The steering control method according to claim 2, further comprising:
in response that the actual track is corrected until the deviation between the actual track and the planned path is less than the preset value, controlling the steering wheel (151) to remain in a current position by controlling the steering wheel motor (152) to stop rotating.

4. The steering control method according to claim 1, further comprising:
adjusting a heading angle of the vehicle (1) to the preset angle; and
controlling, by the vehicle control device (20), the steering wheel motor (152) to stop rotating, so as to stop rotating the steering wheel (151).

5. The steering control method according to claim 1, further comprising:
in response that the steering wheel (151) is taken over by manual power, controlling the steering wheel motor (152) to stop working, to control the vehicle (1) to enter a manual steering control state.

6. A steering wheel steering device, applied in driving a vehicle (1) to steer, comprising: a steering wheel (151); and a steering wheel motor (152), wherein: the steering wheel (151) is connected with the steering wheel motor (152) and is driven by the steering wheel motor (152), the steering wheel motor (152) is controllably connected with a vehicle control device (20) of the vehicle (1), the vehicle control device (20) transmits a steering instruction to the steering wheel motor (152) based on an automatic driving instruction, to control the steering wheel motor (152) to rotate the steering wheel (151) to a preset angle, and a rotation angle of the steering wheel (151) is controlled by rotation of the steering wheel motor (152), **characterized in that**:
in response that the vehicle (1) is required to turn around, the steering instruction is transmitted to the vehicle control device (20), and the steering wheel steering device (15) being controlled by the vehicle control device (20);
the vehicle control device (20) transmits an instruction to the steering wheel steering device (15), to activate the steering wheel motor (152) of the steering wheel steering device (15) into a working mode;
the vehicle control device (20) acquires state parameters of the steering wheel motor (152) and determines whether the steering wheel steering device (15) is in an idle state, in response that the steering wheel steering device (15) is in the idle state, controls the steering wheel steering device (15) to rotate based on the instruction, the idle state is a state that the steering wheel (151) is not manipulated by a driver and is in a working state;
the vehicle control device (20) acquires a rotation speed of the steering wheel motor (152), compares the rotation speed of the steering wheel motor (152) with a preset rotation speed in the instruction, and in response that the rotation speed of the steering wheel motor (152) is less than the preset rotation speed, controls the steering wheel motor (152) to increase the rotation speed.

7. The steering wheel steering device according to claim 6, further comprising:
a steering wheel motor detector (153) acquiring rotation parameters of the steering wheel motor (152) and communicating with the vehicle control device (20), the steering instruction transmitted by the vehicle control device (20) comprises a rotation parameter setting value of the steering wheel motor (152).

## Patentansprüche

1. Ein Lenkungssteuerungsverfahren für das automatische Fahren eines Fahrzeugs, umfassend:
als Reaktion auf eine Lenkanweisung, Antreiben eines Lenkrads (151), um sich unter Verwendung eines Lenkradmotors (152) basierend auf einer Anweisung zum automatischen Fahren um einen voreingestellten Winkel zu drehen, wobei ein Drehwinkel des Lenkrads (151) durch die Drehung des Lenkradmotors (152) gesteuert wird, **dadurch gekennzeichnet, dass** das Lenkungssteuerungsverfahren ferner umfasst:
als Reaktion darauf, dass das Fahrzeug (1) wenden muss, Übertragen der Lenkanweisung an eine Fahrzeugsteuerungsvorrichtung (20), und wobei eine Vorrichtung zur Lenkung des Lenkrads (15) von der Fahrzeugsteuerungsvorrichtung (20) gesteuert wird;
übertragen einer Anweisung durch die Fahrzeugsteuerungsvorrichtung (20) an die Vorrichtung zur Lenkung des Lenkrads (15), um den Lenkradmotor (152) der Vorrichtung zur Lenkung des Lenkrads (15) in einen Arbeitsmodus zu aktivieren;
erfassen von Zustandsparametern des Lenkradmotors (152) und Bestimmen, ob sich die Vorrichtung zur Lenkung des Lenkrads (15) in einem Ruhezustand befindet, wobei der Ruhezustand ein Zustand ist, in dem das Lenkrad (151) nicht von einem Fahrer betätigt wird und sich in einem Arbeitszustand befindet;
als Reaktion darauf, dass sich die Vorrichtung zur Lenkung des Lenkrads (15) im Ruhezustand befindet, Steuern der Vorrichtung zur Lenkung des Lenkrads (15), um sich basierend auf einer Steueranweisung von der Fahrzeugsteuerungsvorrichtung (20) zu drehen;
erfassen einer Drehzahl des Lenkradmotors (152);
vergleichen der Drehzahl des Lenkradmotors (152) mit einer voreingestellten Drehzahl in der Steueranweisung; und
als Reaktion darauf, dass die Drehzahl des Lenkradmotors (152) geringer als die voreingestellte Drehzahl ist, Steuern des Lenkradmotors (152), um die Drehzahl zu erhöhen.

2. Das Lenkungssteuerungsverfahren nach Anspruch 1, ferner umfassend:
als Reaktion darauf, dass das Fahrzeug (1) automatisch entlang eines geplanten Pfades fährt und eine Abweichung zwischen einer tatsächlichen Spur des Fahrzeugs (1) und dem geplanten Pfad größer als ein voreingestellter Wert ist, Übertragen der Lenkanweisung an die Vorrichtung zur Lenkung des Lenkrads (15), die den Lenkradmotor (152) und das Lenkrad (151) umfasst.

3. Das Lenkungssteuerungsverfahren nach Anspruch 2, ferner umfassend:
als Reaktion darauf, dass die tatsächliche Spur korrigiert wird, bis die Abweichung zwischen der tatsächlichen Spur und dem geplanten Pfad geringer als der voreingestellte Wert ist, Steuern des Lenkrads (151), um in einer aktuellen Position zu verbleiben, indem der Lenkradmotor (152) so gesteuert wird, dass er aufhört, sich zu drehen.

4. Das Lenkungssteuerungsverfahren nach Anspruch 1, ferner umfassend:
einstellen eines Kurswinkels des Fahrzeugs (1) auf den voreingestellten Winkel; und
steuern des Lenkradmotors (152) durch die Fahrzeugsteuerungsvorrichtung (20), um die Drehung zu stoppen, um so das Drehen des Lenkrads (151) zu stoppen.

5. Das Lenkungssteuerungsverfahren nach Anspruch 1, ferner umfassend:
als Reaktion darauf, dass das Lenkrad (151) durch manuelle Kraft übernommen wird, Steuern des Lenkradmotors (152), um den Betrieb einzustellen, um das Fahrzeug (1) so zu steuern, dass es in einen manuellen Lenkungssteuerungszustand übergeht.

6. Eine Vorrichtung zur Lenkung des Lenkrads, die beim Fahren eines Fahrzeugs (1) zum Lenken angewendet wird, umfassend: ein Lenkrad (151); und einen Lenkradmotor (152), wobei: das Lenkrad (151) mit dem Lenkradmotor (152) verbunden ist und vom Lenkradmotor (152) angetrieben wird, der Lenkradmotor (152) steuerbar mit einer Fahrzeugsteuerungsvorrichtung (20) des Fahrzeugs (1) verbunden ist, die Fahrzeugsteuerungsvorrichtung (20) basierend auf einer Anweisung zum automatischen Fahren eine Lenkanweisung an den Lenkradmotor (152) überträgt, um den Lenkradmotor (152) so zu steuern, dass er das Lenkrad (151) auf einen voreingestellten Winkel dreht, und ein Drehwinkel des Lenkrads (151) durch die Drehung des Lenkradmotors (152) gesteuert wird, **dadurch gekennzeichnet, dass**:
als Reaktion darauf, dass das Fahrzeug (1) wenden muss, die Lenkanweisung an die Fahrzeugsteuerungsvorrichtung (20) übertragen wird, und die Vorrichtung zur Lenkung des Lenkrads (15) von der Fahrzeugsteuerungsvorrichtung (20) gesteuert wird;
die Fahrzeugsteuerungsvorrichtung (20) eine Anweisung an die Vorrichtung zur Lenkung des Lenkrads (15) überträgt, um den Lenkradmotor (152) der Vorrichtung zur Lenkung des Lenkrads (15) in einen Arbeitsmodus zu aktivieren;
die Fahrzeugsteuerungsvorrichtung (20) Zustandsparameter des Lenkradmotors (152) erfasst und bestimmt, ob sich die Vorrichtung zur Lenkung des Lenkrads (15) in einem Ruhezustand befindet, als Reaktion darauf, dass sich die Vorrichtung zur Lenkung des Lenkrads (15) im Ruhezustand befindet, die Vorrichtung zur Lenkung des Lenkrads (15) so steuert, dass sie sich basierend auf der Anweisung dreht, wobei der Ruhezustand ein Zustand ist, in dem das Lenkrad (151) nicht von einem Fahrer betätigt wird und sich in einem Arbeitszustand befindet;
die Fahrzeugsteuerungsvorrichtung (20) eine Drehzahl des Lenkradmotors (152) erfasst, die Drehzahl des Lenkradmotors (152) mit einer voreingestellten Drehzahl in der Anweisung vergleicht, und als Reaktion darauf, dass die Drehzahl des Lenkradmotors (152) geringer als die voreingestellte Drehzahl ist, den Lenkradmotor (152) so steuert, dass die Drehzahl erhöht wird.

7. Die Vorrichtung zur Lenkung des Lenkrads nach Anspruch 6, ferner umfassend:
einen Lenkradmotordetektor (153), der Drehparameter des Lenkradmotors (152) erfasst und mit der Fahrzeugsteuerungsvorrichtung (20) kommuniziert, wobei die von der Fahrzeugsteuerungsvorrichtung (20) übertragene Lenkanweisung einen Drehparameter-Einstellwert des Lenkradmotors (152) umfasst.

## Revendications

1. Un procédé de commande de direction pour la conduite automatique d'un véhicule, comprenant: en réponse à une instruction de direction, l'entraînement d'un volant de direction (151) pour qu'il tourne d'un angle prédéfini en utilisant un moteur de volant de direction (152) sur la base d'une instruction de conduite automatique, un angle de rotation du volant de direction (151) étant commandé par la rotation du moteur de volant de direction (152), **caractérisé en ce que** le procédé de commande de direction comprend en outre:
en réponse au fait que le véhicule (1) doit faire demi-tour, la transmission de l'instruction de direction à un dispositif de commande de véhicule (20), et un dispositif de direction de volant (15) étant commandé par le dispositif de commande de véhicule (20);
la transmission, par le dispositif de commande de véhicule (20), d'une instruction au dispositif de direction de volant (15), pour activer le moteur de volant de direction (152) du dispositif de direction de volant (15) dans un mode de fonctionnement;
l'acquisition de paramètres d'état du moteur de volant de direction (152) et la détermination du fait que le dispositif de direction de volant (15) est dans un état de repos, l'état de repos étant un état dans lequel le volant de direction (151) n'est pas manipulé par un conducteur et est dans un état de fonctionnement;
en réponse au fait que le dispositif de direction de volant (15) est dans l'état de repos, la commande de la rotation du dispositif de direction de volant (15) sur la base d'une instruction de commande provenant du dispositif de commande de véhicule (20);
l'acquisition d'une vitesse de rotation du moteur de volant de direction (152);
la comparaison de la vitesse de rotation du moteur de volant de direction (152) avec une vitesse de rotation prédéfinie dans l'instruction de commande; et
en réponse au fait que la vitesse de rotation du moteur de volant de direction (152) est inférieure à la vitesse de rotation prédéfinie, la commande du moteur de volant de direction (152) pour augmenter la vitesse de rotation.

2. Le procédé de commande de direction selon la revendication 1, comprenant en outre:
en réponse au fait que le véhicule (1) se déplace automatiquement le long d'une trajectoire planifiée, et qu'un écart entre une trajectoire réelle du véhicule (1) et la trajectoire planifiée est supérieur à une valeur prédéfinie, la transmission de l'instruction de direction au dispositif de direction de volant (15), qui comprend le moteur de volant de direction (152) et le volant de direction (151).

3. Le procédé de commande de direction selon la revendication 2, comprenant en outre:
en réponse au fait que la trajectoire réelle est corrigée jusqu'à ce que l'écart entre la trajectoire réelle et la trajectoire planifiée soit inférieur à la valeur prédéfinie, la commande du volant de direction (151) pour qu'il reste dans une position actuelle en commandant au moteur de volant de direction (152) d'arrêter de tourner.

4. Le procédé de commande de direction selon la revendication 1, comprenant en outre:
l'ajustement d'un angle de cap du véhicule (1) à l'angle prédéfini; et
la commande, par le dispositif de commande de véhicule (20), de l'arrêt de la rotation du moteur de volant de direction (152), de manière à arrêter la rotation du volant de direction (151).

5. Le procédé de commande de direction selon la revendication 1, comprenant en outre:
en réponse au fait que le volant de direction (151) est repris par une force manuelle, la commande de l'arrêt du fonctionnement du moteur de volant de direction (152), pour commander l'entrée du véhicule (1) dans un état de commande de direction manuelle.

6. Un dispositif de direction de volant, appliqué à la conduite d'un véhicule (1) pour le diriger, comprenant: un volant de direction (151); et un moteur de volant de direction (152), dans lequel: le volant de direction (151) est relié au moteur de volant de direction (152) et est entraîné par le moteur de volant de direction (152), le moteur de volant de direction (152) est connecté de manière commandable à un dispositif de commande de véhicule (20) du véhicule (1), le dispositif de commande de véhicule (20) transmet une instruction de direction au moteur de volant de direction (152) sur la base d'une instruction de conduite automatique, pour commander la rotation du volant de direction (151) par le moteur de volant de direction (152) à un angle prédéfini, et un angle de rotation du volant de direction (151) est commandé par la rotation du moteur de volant de direction (152), **caractérisé en ce que**:
en réponse au fait que le véhicule (1) doit faire demi-tour, l'instruction de direction est transmise au dispositif de commande de véhicule (20), et le dispositif de direction de volant (15) étant commandé par le dispositif de commande de véhicule (20);
le dispositif de commande de véhicule (20) transmet une instruction au dispositif de direction de volant (15), pour activer le moteur de volant de direction (152) du dispositif de direction de volant (15) dans un mode de fonctionnement;
le dispositif de commande de véhicule (20) acquiert des paramètres d'état du moteur de volant de direction (152) et détermine si le dispositif de direction de volant (15) est dans un état de repos, en réponse au fait que le dispositif de direction de volant (15) est dans l'état de repos, commande la rotation du dispositif de direction de volant (15) sur la base de l'instruction, l'état de repos est un état dans lequel le volant de direction (151) n'est pas manipulé par un conducteur et est dans un état de fonctionnement;
le dispositif de commande de véhicule (20) acquiert une vitesse de rotation du moteur de volant de direction (152), compare la vitesse de rotation du moteur de volant de direction (152) avec une vitesse de rotation prédéfinie dans l'instruction, et en réponse au fait que la vitesse de rotation du moteur de volant de direction (152) est inférieure à la vitesse de rotation prédéfinie, commande le moteur de volant de direction (152) pour augmenter la vitesse de rotation.

7. Le dispositif de direction de volant selon la revendication 6, comprenant en outre:
un détecteur de moteur de volant de direction (153) acquérant des paramètres de rotation du moteur de volant de direction (152) et communiquant avec le dispositif de commande de véhicule (20), l'instruction de direction transmise par le dispositif de commande de véhicule (20) comprend une valeur de réglage de paramètre de rotation du moteur de volant de direction (152).
